# EUROPÄISCHE PATENTSCHRIFT

(11) **EP 2 359 019 B1**
(45) Veröffentlichungstag und Bekanntmachung des Hinweises auf die Patenterteilung: **31.10.2012**
(21) Anmeldenummer: 09759704.1
(22) Anmeldetag: 17.11.2009
(51) Int. Cl.: F16D 41/066

(54) **ROLLENFREILAUF**
ROLLER FREE-WHEEL
DISPOSITIF DE ROUE LIBRE

(30) Priorität: 20.11.2008 DE 102008058194
(43) Veröffentlichungstag der Anmeldung: 24.08.2011
(73) Patentinhaber: Schaeffler Technologies AG & Co. KG, 91074 Herzogenaurach (DE)
(72) Erfinder: SMETANA, Tomas, 91074 Herzogenaurach (DE)
(86) Internationale Anmeldenummer: PCT/EP2009/065269
(87) Internationale Veröffentlichungsnummer: WO 2010/057868

(56) Entgegenhaltungen:
- DE-A1- 2 044 915
- DE-A1- 2 330 193
- DE-B- 1 102 514

## Beschreibung

### Gebiet der Erfindung

Die Erfindung betrifft eine allgemein als Rollenfreilauf bezeichnete Freilaufkupplung, welche einen Klemmrampen aufweisenden Innenring, einen eine zylindrische Innenoberfläche aufweisenden Außenring, eine Anzahl im Spaltraum zwischen dem Innenring und dem Außenring angeordneter Klemmrollen, sowie mindestens ein einstückiges, ringförmiges, die Klemmrollen gegen den Außenring anfederndes Federelement umfasst.

### Hintergrund der Erfindung

Eine Rollenfreilauf der eingangs genannten Art ist beispielsweise aus der DE 2 044 915 A bekannt. Dieser Rollenfreilauf ist insbesondere zur Verwendung bei Drehmomentwandlern vorgesehen.

### Aufgabe der Erfindung

Der Erfindung liegt die Aufgabe zu Grunde, einen besonders einfach aufgebauten, vielseitig verwendbaren Rollenfreilauf anzugeben.

### Zusammenfassung der Erfindung

Diese Aufgabe wird erfindungsgemäß gelöst durch einen Rollenfreilauf mit den Merkmalen des Anspruchs 1. Der Rollenfreilauf arbeitet mit Klemmrollen, welche radial zwischen einem mit Klemmrampen versehenen Innenring und einem glatten Außenring angeordnet sind. Zur Anfederung der Klemmrollen an den Außenring sind zwei in der Art von Sprengringen einteilig ausgebildete Federelemente vorgesehen, welche an zapfenförmigen Verlängerungen der Klemmrollen angreifen. Die beiden auch als Ansatzstücke bezeichneten zapfenförmigen Verlängerungen jeder Klemmrolle haben gegenüber der eigentlichen Klemmrolle einen reduzierten Durchmesser. Vorzugsweise sind die Ansatzstücke als Gleitbuchsen ausgebildet, welche auf einstückig mit der Klemmrolle ausgebildete Zapfen aufgesetzt sind. Als Werkstoffe zur Herstellung der Gleitbuchsen sind beispielsweise Bronze, Messing oder Kunststoff enthaltende Gleitmaterialien geeignet. Die Gleitbuchse deckt in bevorzugter Ausgestaltung den Zapfen vollständig und eine an den Zapfen anschließende ringförmige Stirnfläche der Klemmrolle zumindest teilweise ab.

Die als Sprengringe ausgebildeten Federelemente weisen an ihrer radial äußeren Seite vorzugsweise Einkerbungen auf, in welchen jeweils ein zapfenförmiges Ansatzstück einer Klemmrolle einliegt. Die Einkerbungen weisen gegenüber der Tangentialrichtung des Freilaufs derart schräg gestellte Flanken auf, dass beim Anlaufen eines Ansatzstücks gegen eine solche Flanke keine Selbsthemmung auftritt. Vorzugsweise schließt eine Flanke der Einkerbung mit der Tangentialrichtung des Freilaufs einen Winkel von mindestens 10° und maximal 40°, insbesondere einen Winkel von mindestens 25° und maximal 35°, ein. Im Freilaufbetrieb, bei rotierendem Außenring, kann somit das als Gleitelement ausgebildete Ansatzstück in der Einkerbung des ringförmigen Federelements - genauer: an einer Flanke der Einkerbung - gleiten, während die Klemmrolle auf der Innenoberfläche des Außenrings abrollt. Die Klemmrolle ist hierbei vorzugsweise vom Innenring des Freilaufs abgehoben. Die beiden Flanken der insgesamt V-förmigen Einkerbung sind in bevorzugter Ausgestaltung asymmetrisch ausgebildet, wobei diejenige Flanke, gegen welche das Ansatzstück der Klemmrolle im Freilaufbetrieb anläuft, einen kleineren Winkel mit der Tangentialrichtung des Freilaufs einschließt als die zweite Flanke. Der relativ flache Verlauf der ersten Flanke sorgt dafür, dass die Klemmrolle beim Auskuppelvorgang innerhalb eines definierten Weges abgebremst wird, das heißt kinetische Energie abgibt. Auf diese Weise ist eine hohe Schaltfrequenz des Rollenfreilaufs von beispielsweise 100 Hz realisierbar.

Zur Fixierung der Federelemente in Axialrichtung weist der Innenring vorzugsweise umlaufende Nuten auf, in welchen die Federelemente angeordnet sind. Hierbei ist es ausreichend, wenn die Nuten nur in einem Teilbereich jeder Klemmrampe ausgebildet sind. Zur Verdrehsicherung eines Federelements ist beispielsweise ein einstückig an dieses angeformter Sicherungsansatz geeignet, welcher in eine Sicherungskontur des Innenrings eingreift.

Die Federelemente dienen nicht nur der Anfederung, sondern auch der Führung der Klemmrollen, sodass der Rollenfreilauf keinen Käfig benötigt. Aufgrund der Abbremsung der Klemmrollen durch die als Sprengringe ausgebildeten Federelemente bei Schaltvorgängen benötigt der Rollenfreilauf auch kein gesondertes Dämpfungselement.

Die der Erfindung zu Grunde liegende Aufgabe wird auch durch einen Rollenfreilauf mit den Merkmalen des Anspruchs 11 gelöst. Dieser Rollenfreilauf weist einen Außenstern, das heißt einen Außenring mit innen liegenden Klemmrampen, sowie einen Innenring mit zylindrischer Außenoberfläche auf. Die ringförmigen Federelemente liegen vorzugsweise in Nuten im Außenring ein und drücken die Klemmrollen nach innen. Ansonsten entspricht der Aufbau des Rollenfreilaufs nach Anspruch 11 dem Aufbau des Rollenfreilaufs nach Anspruch 1.

Der erfindungsgemäße Rollenfreilauf ist insbesondere zur Verwendung in einem stufenlosen Kurbelgetriebe geeignet. Ein solches Getriebe ist prinzipiell beispielsweise aus der DE 102 43 535 A1 bekannt.

Weitere Anwendungsmöglichkeiten für den Rollenfreilauf sind beispielsweise bei Drehmomentwandlern, Riemenspannern, Förderbändern oder Rücklaufsperren gegeben.

Der Vorteil der Erfindung liegt insbesondere darin, dass ein Rollenfreilauf, welcher lediglich eine geringe Anzahl unterschiedlicher Teile, nämlich einen Innenring, einen Außenring, zwei Sprengringe sowie eine Mehrzahl durch die Sprengringe angefederter Klemmrollen, aufweist und die Übertragung hoher Drehmomente von beispielsweise mehreren 100 Nm sowie schnelle Schaltvorgänge ermöglicht, rationell herstellbar, insbesondere einfach montierbar, und mit hoher Funktionssicherheit betreibbar ist.

Nachfolgend wird ein Ausführungsbeispiel der Erfindung anhand einer Zeichnung näher erläutert. Hierin zeigen:

### Kurze Beschreibung der Zeichnung

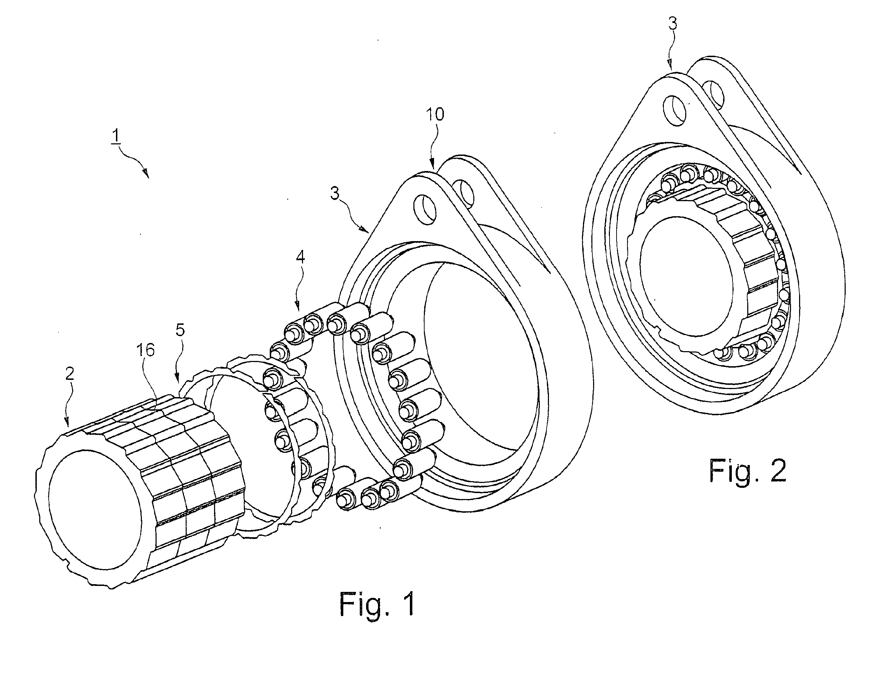

- Fig. 1: einen Rollenfreilauf in einer Explosionsdarstellung,
- Fig. 2: den Rollenfreilauf in perspektivischer Ansicht,

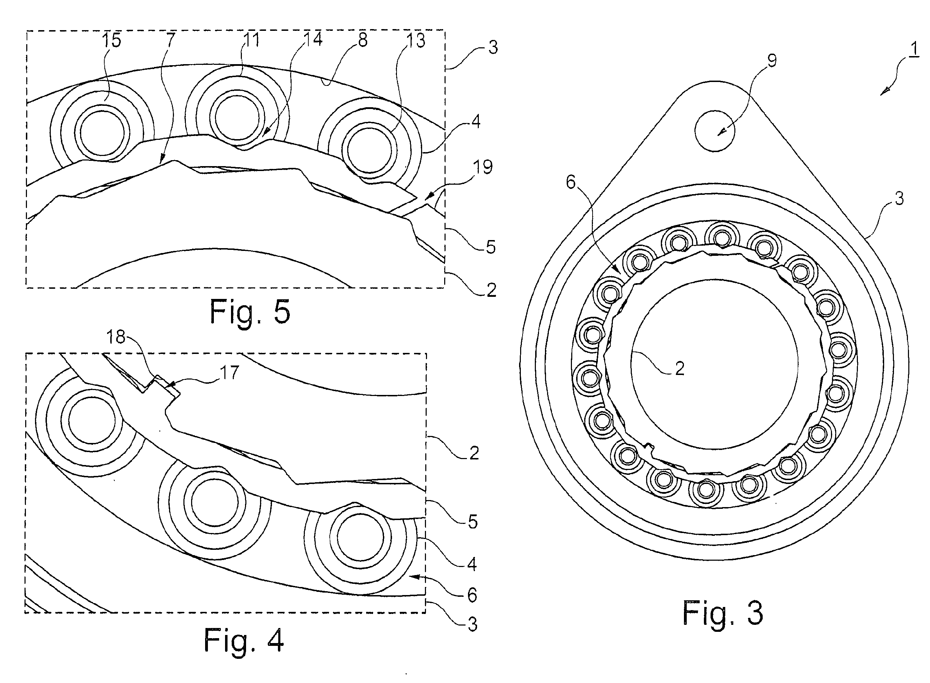

- Fig. 3: den Rollenfreilauf in einer Schnittdarstellung,
- Fig. 4, 5: Details des Rollenfreilaufs in Schnittdarstellungen,

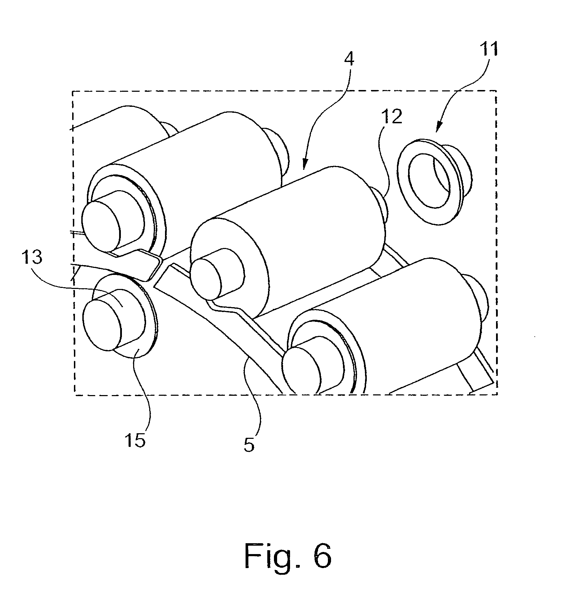

- Fig. 6: eine perspektivische Detaildarstellung des Rollenfreilaufs,
- Fig. 7: eine Detaildarstellung des Rollenfreilaufs mit Veranschaulichung verschiedener auf eine Klemmrolle wirkender Kräfte.

### Ausführliche Beschreibung der Zeichnung

Ein insgesamt mit dem Bezugszeichen 1 gekennzeichneter Rollenfreilauf weist einen Innenring 2, einen Außenring 3, eine Anzahl Klemmrollen 4 sowie zwei ringförmige Federelemente 5 auf. Die Klemmrollen 4 sind ebenso wie die auch als Sprengringe bezeichneten Federelemente 5 in einem Spaltraum 6 angeordnet, welcher zwischen einer Klemmrampen 7 aufweisenden Oberfläche des Innenrings 2 und einer zylindrischen Innenoberfläche 8 des Außenrings 3 gebildet ist. Ein mit parallel zur Achse des Rollenfreilaufs 1 verlaufenden Bohrungen 9 versehener Anlenkbereich 10 des Außenrings 3 bietet die Möglichkeit zur Kopplung des Rollenfreilaufs 1 mit einer Pleuelstange eines nicht weiter dargestellten stufenlosen Kurbelgetriebes, hinsichtlich dessen grundsätzlicher Funktion auf die DE 102 43 535 A1 verwiesen wird.

Die Klemmrollen 4 sind gegen den Außenring 3 angefedert, wobei die ringförmigen Federelemente 5 an stirnseitigen Ansatzstücken 11 der Klemmrollen 4 angreifen. Jedes Ansatzstück 11 ist als hutförmige Gleitbuchse ausgebildet, welche auf einen die Klemmrolle 4 stirnseitig verlängernden Zapfen 12 aufgesetzt ist. Eine Umfangsfläche 13 des Ansatzstücks 11 liegt hierbei in einer Einkerbung 14 des Federelements 5 ein. Weiter kontaktiert eine von der Gleitbuchse 11 teilweise abgedeckte Stirnfläche 15 der Klemmrolle 4 das Federelement 5. Die Gleitbuchsen 11, das heißt die beidseitig auf jede Klemmrolle 4 aufgesteckten Ansatzstücke 11, sind aus einem für eine Gleitlagerung geeigneten Material, insbesondere aus einer Buntmetalllegierung, hergestellt. Alternativ können die Gleitbuchsen 11 auch aus einem mit einem Gleitbelag beschichteten Stahl hergestellt sein.

Jedes sprengringartige Federelement 5 ist durch eine umlaufende Nut 16 in der Außenoberfläche des Innenrings 2 in axialer Richtung fixiert und durch einen an der Innenseite des Federelementes 5 angeformten Ansatz 17, welcher in eine Sicherungskontur 18 im Innenring 2 eingreift, gegen Verdrehung gesichert. Jedes Federelement 5 weist an dessen Umfang eine Öffnung 19 auf; alternativ könnte an dieser Stelle auch eine Überlappung der Enden des Federelementes 5 vorgesehen sein.

Die Klemmrollen 4 werden durch die Federelemente 5 nicht nur mit einer Kraft in radialer Richtung beaufschlagt, sondern auch in tangentialer Richtung geführt, sodass kein gesonderter Käfig zur Führung der Klemmrollen 4 erforderlich ist.

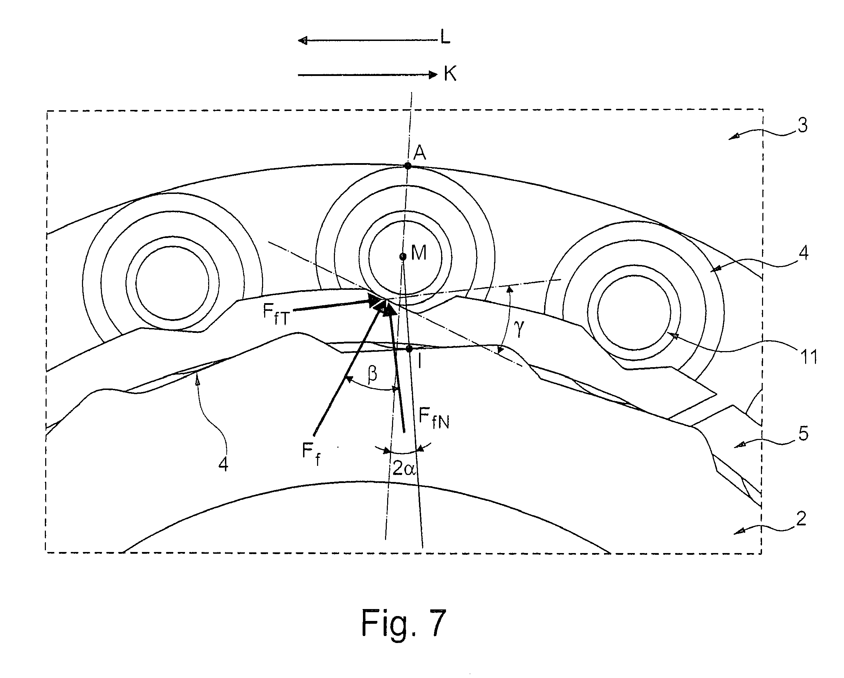

Darüberhinaus übernehmen die ringförmigen Federelemente 5 auch eine Dämpfungsfunktion, wie im Folgenden anhand Figur 7 erläutert wird. In dieser Figur ist mit M der Mittelpunkt einer Klemmrolle 4, mit A der Anlagepunkt der Klemmrolle 4 am Außenring 3 und mit I der Anlagepunkt der Klemmrolle 4 am Innenring 2 bezeichnet. Der Außenring 3 ist relativ zum Innenring 2 in Leerlaufrichtung L frei drehbar und in Klemmrichtung K blockiert. Der Klemmwinkel ist mit α bezeichnet.

Die Einkerbung 14 auf der Außenseite des Federelements 5 ist derart gestaltet, dass die Klemmrolle 4 zumindest geringfügig in tangentialer Richtung des Rollenfreilaufs 1 beweglich ist. Die Beweglichkeit der Klemmrolle 4 ist dabei durch zwei Flanken 20,21, die zusammen die Kontur der Einkerbung 14, in welcher das Ansatzstück 11 der Klemmrolle 4 einliegt, bilden, begrenzt. Beim Übergang vom blockierten Zustand in den Freilaufbetrieb des Rollenfreilaufs 1 läuft das Ansatzstück 11 an die Flanke 20 an. Am Kontaktpunkt zwischen der Klemmrolle 4 und dem Federelement 5 wirkt dabei zwischen den genannten Komponenten 4,5 eine Kraft F_{f}, welche sich aus einer Normalkraft F_{fN} und einer Tangentialkraft F_{fT} zusammensetzt. Der mit β bezeichnete Keilwinkel entspricht dem in Fig. 7 mit γ bezeichneten Winkel, der zwischen der Tangentialrichtung und der Flanke 20 eingeschlossen ist und 30° ± 5° beträgt. Der Winkel γ ist damit ausreichend groß, um sicherzustellen, dass es nicht zu einer Selbsthemmung zwischen der Klemmrolle 4 und dem Federelement 5 kommt, und zugleich klein genug, um ein gezieltes Abbremsen der Klemmrolle 4 längs der Flanke 20 unter gleichzeitiger Abgabe von Energie an das Federelement 5 zu ermöglichen.

Beim Übergang vom Freilaufbetrieb in den blockierten Zustand des Rollenfreilaufs 1 verlagert sich die Klemmrolle 4 innerhalb der Einkerbung 14 in Richtung zur zweiten, im Vergleich zur ersten Flanke 20 relativ steil gestellten, das heißt mehr radial ausgerichteten, Flanke 21. Die beiden Federelemente 5 sorgen dafür, dass die Klemmrollen 4 sowohl im Freilaufbetrieb als auch beim Übergang in den blockierten Zustand permanent am Außenring 3 anliegen.

### Bezugszeichenliste

- 1: Rollenfreilauf
- 2: Innenring
- 3: Außenring
- 4: Klemmrolle
- 5: Federelement
- 6: Spaltraum
- 7: Klemmrampe
- 8: Innenoberfläche
- 9: Bohrung
- 10: Anlenkbereich
- 11: Ansatzstück
- 12: Zapfen
- 13: Umfangsfläche
- 14: Einkerbung
- 15: Stirnfläche
- 16: Nut
- 17: Ansatz
- 18: Sicherungskontur
- 19: Öffnung
- 20: Flanke
- 21: Flanke

- α: Klemmwinkel
- β: Keilwinkel
- γ: Winkel
- A: äußerer Anlagepunkt
- F_{f}: Kraft
- F_{fN}: Normalkraft
- F_{fT}: Tangentialkraft
- I: innerer Anlagepunkt
- K: Klemmrichtung
- L: Leerlaufrichtung
- M: Mittelpunkt

## Patentansprüche

1. Rollenfreilauf, mit
- einem Klemmrampen (7) aufweisenden Innenring (2),
- einem eine zylindrische Innenoberfläche (8) aufweisenden Außenring (3),
- einer Anzahl Klemmrollen (4), welche in einem zwischen dem Innenring (2) und dem Außenring (3) gebildeten Spaltraum (6) angeordnet sind,
- einem die Klemmrollen (4) gegen die Innenoberfläche (8) des Außenrings (3) andrückenden, einstückig und ringförmig ausgebildeten Federelement (5),
**dadurch gekennzeichnet, dass** stirnseitig der Klemmrollen (4) jeweils ein Federelement (5) angeordnet ist, welches an zapfenförmigen Ansatzstücken (11) der Klemmrollen (4) angreift.

2. Rollenfreilauf nach Anspruch 1, **dadurch gekennzeichnet, dass** das Ansatzstück (11) als Gleitbuchse ausgebildet ist.

3. Rollenfreilauf nach Anspruch 2, **dadurch gekennzeichnet, dass** die Gleitbuchse (11) auf einen einstückig mit der Klemmrolle (4) ausgebildeten Zapfen (12) aufgesetzt ist.

4. Rollenfreilauf nach Anspruch 3, **dadurch gekennzeichnet, dass** die Gleitbuchse (11) den Zapfen (12) vollständig und eine an den Zapfen (12) anschließende ringförmige Stirnfläche (15) der Klemmrolle (4) zumindest teilweise abdeckt.

5. Rollenfreilauf nach einem der Ansprüche 1 bis 4, **dadurch gekennzeichnet, dass** das Federelement (5) der Innenoberfläche (8) des Außenrings (3) zugewandte Einkerbungen (14) aufweist, in welchen jeweils ein zapfenförmiges Ansatzstück (11) einliegt.

6. Rollenfreilauf nach Anspruch 5, **dadurch gekennzeichnet, dass** die Einkerbung (14) eine gegenüber der Tangentialrichtung um mindestens 15° und maximal 40° schräg gestellte Flanke (20) aufweist, gegen welche das Ansatzstück (11) im Freilaufbetrieb anläuft.

7. Rollenfreilauf nach Anspruch 5 oder 6, **dadurch gekennzeichnet, dass** die Einkerbung (14) unsymmetrisch ausgebildet ist.

8. Rollenfreilauf nach einem der Ansprüche 1 bis 7, **dadurch gekennzeichnet, dass** der Innenring (2) eine umlaufende Nut (16) aufweist, in welcher das Federelement (5) angeordnet ist.

9. Rollenfreilauf nach Anspruch 8, **dadurch gekennzeichnet, dass** das Federelement (5) verdrehgesichert in der Nut (16) gehalten ist.

10. Verwendung eines Rollenfreilaufs nach einem der Ansprüche 1 bis 9 in einem stufenlosen Kurbelgetriebe.

11. Rollenfreilauf, mit
- einem eine zylindrische Außenoberfläche aufweisenden Innenring (2),
- einem Klemmrampen (7) aufweisenden Außenring (3),
- einer Anzahl Klemmrollen (4), welche in einem zwischen dem Innenring (2) und dem Außenring (3) gebildeten Spaltraum (6) angeordnet sind,
- einem die Klemmrollen (4) gegen die Außenoberfläche des Innenrings (2) andrückenden, einstückig und ringförmig ausgebildeten Federelement (5),
**dadurch gekennzeichnet, dass** stirnseitig der Klemmrollen (4) jeweils ein Federelement (5) angeordnet ist, welches an zapfenförmigen Ansatzstücken (11) der Klemmrollen (4) angreift.

12. Rollenfreilauf nach Anspruch 11, **dadurch gekennzeichnet, dass** das Federelement (5) verdrehgesichert in einer Nut (16) im Außenring (3) gehalten ist.

## Claims

1. Roller freewheel, having
- an inner ring (2) which has clamping ramps (7),
- an outer ring (3) which has a cylindrical inner surface (8),
- a number of clamping rollers (4) which are arranged in a gap space (6) which is formed between the inner ring (2) and the outer ring (3),
- a spring element (5) which is of single-piece and annular configuration and presses the clamping rollers (4) against the inner surface (8) of the outer ring (3),
**characterized in that** in each case one spring element (5) is arranged on the end side of the clamping rollers (4), which spring element (5) acts on journal-shaped attachment pieces (11) of the clamping rollers (4).

2. Roller freewheel according to Claim 1, **characterized in that** the attachment piece (11) is configured as a sliding bush.

3. Roller freewheel according to Claim 2, **characterized in that** the sliding bush (11) is placed onto a journal (12) which is configured in one piece with the clamping roller (4).

4. Roller freewheel according to Claim 3, **characterized in that** the sliding bush (11) completely covers the journal (12) and at least partially covers an annular end face (15) of the clamping roller (4), which end face (15) adjoins the journal (12).

5. Roller freewheel according to one of Claims 1 to 4, **characterized in that** the spring element (5) has notches (14) which face the inner surface (8) of the outer ring (3) and in which in each case one journal-shaped attachment piece (11) lies.

6. Roller freewheel according to Claim 5, **characterized in that** the notch (14) has a flank (20) which is set obliquely by at least 15° and at most 40° with respect to the tangential direction and against which the attachment piece (11) runs up during freewheeling operation.

7. Roller freewheel according to Claim 5 or 6, **characterized in that** the notch (14) is of asymmetrical configuration.

8. Roller freewheel according to one of Claims 1 to 7, **characterized in that** the inner ring (2) has a circumferential groove (16), in which the spring element (5) is arranged.

9. Roller freewheel according to Claim 8, **characterized in that** the spring element (5) is held in the groove (16) in a rotationally locked manner.

10. Use of a roller freewheel according to one of Claims 1 to 9 in a stepless crank mechanism.

11. Roller freewheel, having
- an inner ring (2) which has a cylindrical outer surface,
- an outer ring (3) which has clamping rollers (7),
- a number of clamping rollers (4) which are arranged in a gap space (6) which is formed between the inner ring (2) and the outer ring (3),
- a spring element (5) which is of single-piece and annular configuration and presses the clamping rollers (4) against the outer surface of the inner ring (2),
**characterized in that** in each case one spring element (5) is arranged on the end side of the clamping rollers (4), which spring element (5) acts on journal-shaped attachment pieces (11) of the clamping rollers (4).

12. Roller freewheel according to Claim 11, **characterized in that** the spring element (5) is held in a groove (16) in the outer ring (3) in a rotationally locked manner.

## Revendications

1. Roue libre à rouleaux, comportant
- une bague intérieure (2) comprenant des rampes de serrage (7),
- une bague extérieure (3) comprenant une surface intérieure cylindrique (8),
- un certain nombre de rouleaux de serrage (4) qui sont disposés dans un espace interstitiel (6) formé entre la bague intérieure (2) et la bague extérieure (3),
- un élément ressort (5) annulaire et réalisé d'une seule pièce pressant les rouleaux de serrage (4) contre la surface intérieure (8) de la bague extérieure (3),
**caractérisée en ce qu'**un élément ressort (5) respectif est disposé sur le côté avant des rouleaux de serrage (4), lequel élément ressort vient en prise avec des embouts en forme de tenon (11) des rouleaux de serrage (4).

2. Roue libre à rouleaux selon la revendication 1, **caractérisée en ce que** l'embout (11) est réalisé sous forme de douille de glissement.

3. Roue libre à rouleaux selon la revendication 2, **caractérisée en ce que** la douille de glissement (11) est placée sur un tenon (12) réalisé d'une seule pièce avec le rouleau de serrage (4).

4. Roue libre à rouleaux selon la revendication 3, **caractérisée en ce que** la douille de glissement (11) recouvre entièrement le tenon (12) et recouvre au moins partiellement une surface frontale (15) annulaire du rouleau de serrage (4) se raccordant au tenon (12).

5. Roue libre à rouleaux selon l'une quelconque des revendications 1 à 4, **caractérisée en ce que** l'élément ressort (5) comprend des entaillages (14) tournés vers la surface intérieure (8) de la bague extérieure (3), dans lesquels est logé respectivement un embout en forme de tenon (11).

6. Roue libre à rouleaux selon la revendication 5, **caractérisée en ce que** l'entaillage (14) comprend un flanc (20) disposé de manière inclinée d'au moins 15° et d'au maximum 40° par rapport à la direction tangentielle, contre lequel l'embout (11) vient buter dans le fonctionnement en roue libre.

7. Roue libre à rouleaux selon la revendication 5 ou 6, **caractérisée en ce que** l'entaillage (14) est réalisé de manière asymétrique.

8. Roue libre à rouleaux selon l'une quelconque des revendications 1 à 7, **caractérisée en ce que** la bague intérieure (2) comprend une rainure périphérique (16) dans laquelle est disposé l'élément ressort (5).

9. Roue libre à rouleaux selon la revendication 8, **caractérisée en ce que** l'élément ressort (5) est maintenu de manière bloquée en rotation dans la rainure (16).

10. Utilisation d'une roue libre à rouleaux selon l'une quelconque des revendications 1 à 9 dans une transmission à manivelle à variation continue.

11. Roue libre à rouleaux, comportant
- une bague intérieure (2) comprenant une surface extérieure cylindrique,
- une bague extérieure (3) comprenant des rampes de serrage (7),
- un certain nombre de rouleaux de serrage (4) qui sont disposés dans un espace interstitiel (6) formé entre la bague intérieure (2) et la bague extérieure (3),
- un élément ressort (5) annulaire et réalisé d'une seule pièce pressant les rouleaux de serrage (4) contre la surface extérieure de la bague intérieure (2),
**caractérisée en ce qu'**un élément ressort (5) respectif est disposé sur le côté avant des rouleaux de serrage (4), lequel élément ressort vient en prise avec des embouts en forme de tenon (11) des rouleaux de serrage (4).

12. Roue libre à rouleaux selon la revendication 11, **caractérisée en ce que** l'élément ressort (5) est maintenu de manière bloquée en rotation dans une rainure (16) dans la bague extérieure (3).
